# EUROPÄISCHE PATENTSCHRIFT

(11) **EP 2 664 912 B1**
(45) Veröffentlichungstag und Bekanntmachung des Hinweises auf die Patenterteilung: **02.04.2014**
(21) Anmeldenummer: 12168112.6
(22) Anmeldetag: 15.05.2012
(51) Int. Cl.: G01N 25/72

(54) **Thermographische Materialprüfvorrichtung**
Thermographic material testing device
Dispositif de contrôle de matériel thermographique

(43) Veröffentlichungstag der Anmeldung: 20.11.2013
(73) Patentinhaber: AT-Automation Technology GmbH, 23843 Bad Oldesloe (DE)
(72) Erfinder: Kasper, Dr.-Ing. André, 22946 Trittau (DE); Wandelt, Dipl.-Ing. Michael, 21493 Schwarzenbek (DE)
(74) Vertreter: Patentanwälte Vollmann & Hemmer

(56) Entgegenhaltungen:
- EP-A1- 1 681 562
- EP-A2- 1 431 755
- DE-A1-102007 043 364
- DE-A1-102010 014 744
- DE-A1-102010 027 072

## Beschreibung

Die Erfindung betrifft eine thermographische Materialprüfvorrichtung mit den im Oberbegriff des Anspruchs 1 angegebenen Merkmalen.

Es ist bekannt, dass mittels Thermographie eine zerstörungsfreie Materialprüfung, insbesondere von Verbundwerkstoffen, wie Kohlefaser- oder Glasfaser-Verbundwerkstoffen, möglich ist. Dabei erfolgt eine Anregung, insbesondere thermische Anregung des Materials mit einer geeigneten Anregungsquelle. Anschließend wird mittels einer Thermographie- bzw. Infrarotkamera ein Wärmebild des Bauteils über eine gewisse Zeit aufgezeichnet. Anhand der Oberflächentemperatur und der Änderungen der Oberflächentemperatur über die Zeit kann in Abhängigkeit der eingebrachten Anregungsenergie auf mögliche Fehler oder Unregelmäßigkeiten im Material geschlossen werden.

In jüngerer Zeit finden Verbundwerkstoffe vermehrt Verwendung, beispielsweise im Flugzeugbau, bei Windkraftanlagen oder in neuester Zeit auch im Automobilbau. Diese Anwendungsfelder bedingen nicht nur eine Qualitätskontrolle bei der Herstellung, sondern auch regelmäßige Überprüfungen der Struktur. Dabei stellt sich das Problem, dass sehr große Bauteile geprüft werden müssen.

EP 1 431 755 A2 offenbart ein Ultraschall-Thermographie-Untersuchungsverfahren, bei welchem ein Ultraschallimpuls auf die zu untersuchende Oberfläche gerichtet wird. Der Ultraschallimpuls führt im Bereich von Rissen zu einer Reibung und damit einer Erwärmung des Materials, welche durch eine Wärmebildkamera erfasst werden kann. Mit dieser Untersuchung können nur bestimmte Fehler, wie Risse entdeckt werden. Es lassen sich jedoch keineswegs alle Unregelmäßigkeiten in einem Material, wie beispielsweise Ablösungen im inneren eines Verbundmaterials, detektieren.

Darüber hinaus besteht das aus EP 1 431 755 B1 bekannte System aus einem Rahmen, welcher die Ultraschallquelle und eine Wärmebildkamera trägt sowie einer Steuereinrichtung.

Es ist Aufgabe der Erfindung eine thermographische Materialprüfvorrichtung bereitzustellen, welche auf einfache Weise eine Prüfung sehr großer Bauteile, insbesondere auch auf Fehler im Inneren der Bauteile ermöglicht.

Diese Aufgabe wird durch eine thermographische Materialprüfvorrichtung mit den im Anspruch 1 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße thermographische Materialprüfvorrichtung weist eine Anregungsquelle und eine Infrarotkamera auf. Mit Hilfe der Anregungsquelle wird das zu prüfende Material in bekannter Weise angeregt, d. h. es wird Energie in das zu prüfende Material eingebracht. Mit Hilfe der Infrarotkamera wird die Oberflächentemperatur und der Verlauf der Oberflächentemperatur in einem gewissen Zeitraum beobachtet und auf der Grundlage der so sichtbar gemachten Temperaturverläufe und Temperaturänderungen lassen sich in be-kannter Weise Strukturen im Inneren des zu prüfenden Materials und insbesondere Fehler im Inneren des zu prüfenden Materials, beispielsweise Ablösungen von Gewebelagen in Faserverbundwerkstoffen sichtbar machen.

Um auch die Prüfung größerer oder komplexer Bauteile auf einfache Weise möglich zu machen, sind erfindungsgemäß die Anregungsquelle und die Infrarotkamera in eine mobile Prüfeinheit integriert. Dabei sind die Infrarotquelle und die Anregungsquelle vorzugsweise fest und definiert zueinander ausgerichtet in der mobilen Prüfeinheit angeordnet. So kann die mobile Prüfeinheit auf einfache Weise an der gewünschten Stelle des zu prüfenden Bauteils angesetzt werden. Die Anregungsquelle und die Infrarotkamera sind zueinander so ausgerichtet bzw. positioniert, dass die Infrarotkamera die von der Anregungsquelle bestrahlte bzw. angeregte Fläche im Bild erfasst. So ist es möglich, eine Anregung und Prüfung ohne spezielle Justierung und Ausrichtung der Anregungsquelle und der Infrarotkamera im Einzelfall zu ermöglichen. Es muss lediglich die mobile Prüfeinheit, in welcher Anregungsquelle und Infrarotkamera angeordnet sind, an der gewünschten Stelle des zu prüfenden Bauteils platziert werden. Um die mobile Prüfeinheit dabei sicher an dem zu prüfenden Bauteil fixieren zu können, weist die mobile Prüfeinheit erfindungsgemäß zusätzlich eine Haltevorrichtung auf, welche so ausgestaltet ist, dass mittels der Haltevorrichtung die mobile Prüfeinheit an dem zu prüfenden Bauteil befestigt werden kann. Dabei ist die Haltevorrichtung insbesondere so ausgebildet, dass auch eine Befestigung an schrägen, insbesondere auch an vertikal oder über Kopf angeordneten zu prüfenden Flächen möglich ist. Dies ermöglicht es, komplexe und große Bauteile, beispielsweise an Flugzeugen, vor Ort zu prüfen, da die mobile Prüfeinheit an beliebiger Stelle des zu prüfenden Bauteils mit Hilfe der Haltevorrichtung angeordnet und fixiert werden kann.

D. h. erfindungsgemäß sind alle wesentlichen Komponenten, nämlich die Anregungsquelle und die Thermographie- bzw. Infrarotkamera gemeinsam mit einer Haltevorrichtung in einer mobilen Prüfeinheit integriert. Dabei ist die mobile Prüfeinheit so ausgebildet, dass sie bevorzugt so leicht und so klein ist, dass sie von Hand ohne Problem bewegt werden kann und an dem zu prüfenden Bauteil angeordnet werden kann. So wird eine sehr einfache und leicht ausführbare Prüfung komplexer Bauteile ermöglicht.

Die Infrarotkamera ist vorzugsweise eine Infrarotkamera, welche im langwelligen (7 pm - 13 pm) und/oder mittleren Infrarotbereich (3 pm - 5 pm) arbeitet. Dabei ist die Infrarotkamera möglichst kompakt ausgebildet, um in der mobilen Prüfeinheit möglichst wenig Raum zu beanspruchen.

Gemäß einer weiteren bevorzugten Ausführungsform kann die Haltevorrichtung mit Justagemitteln ausgebildet sein, welche es ermöglichen, die Infrarotkamera und die Anregungsquelle in gewünschter Weise an dem zu fixierenden Bauteil zu positionieren. Die Justagemittel dienen dabei insbesondere dazu, die Anregungsquelle und die Infrarotkamera in eine gewünschte definierte Lage relativ zu dem zu prüfenden Bauteil zu bringen. Dabei verbleiben die Infrarotkamera und die Anregungsquelle jedoch vorzugsweise relativ zueinander fest positioniert, so dass nur die gemeinsame Positionierung bzw. Justage relativ zu dem zu prüfenden Bauteil vorgenommen werden muss und für die einzelne Prüfaufgabe keine relative Ausrichtung zwischen Infrarotkamera und Anregungsquelle vorgenommen werden muss.

Die Haltevorrichtung weist vorzugsweise mehrere Beine auf. Besonders bevorzugt ist die Haltevorrichtung als Dreibein ausgebildet. Ein Dreibein lässt sich mit den freien Enden der drei Beine sicher auch auf gekrümmten oder anderweitig geformten Oberflächen fest positionieren. Die freien Enden der Beine sind bevorzugt als Anlage- bzw. Haltefüße ausgebildet, welche der eigentlichen Fixierung an der Oberfläche des zu prüfenden Bauteils dienen. An den entgegengesetzten Enden der Beine sind die weiteren Bauteile, insbesondere die Anregungsquelle und die Infrarotkamera direkt oder indirekt angebracht. Bevorzugt ist ein Träger oder Tragrahmen vorgesehen, an welchem diese Bauteile angebracht sind und welcher mit den Beinen verbunden ist.

Ferner weist die Haltevorrichtung zumindest ein Vakuumhalteelement auf. Mit Hilfe eines solchen Vakuumhalteelementes lässt sich die mobile Prüfeinheit an beliebigen glatten Oberflächen fixieren. Insbesondere ist auch eine Fixierung unabhängig von den Werkstoffen des zu prüfenden Bauteils möglich, beispielsweise kann die Prüfeinheit so auch an Verbundwerkstoffen fixiert werden. Darüber hinaus er-möglicht ein Vakuumhalteelement eine zerstörungsfreie Fixierung an der zu prüfenden Oberfläche, welche sich leicht befestigen und auch wieder lösen lässt sowie darüber hinaus hohe Haltekräfte ermöglicht.

Besonders bevorzugt tragen die Beine der Haltevorrichtung bzw. des Dreibeins an ihren freien Enden jeweils ein Vakuumhalteelement. Dabei sind die Vakuumhaltelemente vorzugsweise in einem gewissen Grad gelenkig an den Beinen angeordnet, um eine Ausrichtung auch an gekrümmten Oberflächen in der Weise zu ermöglichen, dass sich jedes Vakuumhalteelement plan an der Oberfläche anlegen kann und so für einen sicheren Halt sorgen kann.

Um die Vakuumhalteelemente befestigen und lösen zu können, ist in die mobile Prüfeinheit ein Schaltelement zum Aktivieren und Lösen der Vakuumelemente integriert. D. h. durch Betätigung des Schaltelementes können die Vakuumhaltelemente so aktiviert werden, dass sie den gewünschten Unterdruck erzeugen und die mobile Prüfeinheit so an einer Oberfläche, d. h. einer zu prüfenden Oberfläche fixieren. Zum Lösen wird das Vakuum durch entsprechende Aktivierung des Schaltelementes gelöst und die Prüfeinheit kann von der Oberfläche abgenommen werden. Das Schaltelement kann ein mechanisches oder auch elektrisches Ventil sein, welches eine entsprechende Druckluft- oder Vakuumleitung öffnet oder schließt.

Die Vakuumhalteelemente sind mit ihren Oberflächen so ausgerichtet, dass sie an der Oberfläche, welche zu prüfen ist, zur Anlage kommen können, d. h. an einer Oberfläche auf welche die Anregungsquelle und die Infrarotkamera ausgerichtet sind. Dabei sind die Vakuumhalteelemente z. B. durch Verwendung von Beinen von der Infrarotkamera und der Anregungsquelle so beabstandet, dass die Infrarotkamera auf die von den Vakuumhalteelementen aufgespannte Oberfläche fokussiert ist. Auch die Anregungsquelle ist so ausgerichtet und fokussiert, dass sie in dem von der Haltevorrichtung vorgegebenen Abstand die gewünschte Anregung des zu prüfenden Materials bewirken kann.

Weiter bevorzugt weist das zumindest eine Vakuumhalteelement einen in die mobile Prüfeinheit integrierten Druckluft-Vakuum-Wandler auf. Ein solcher Druckluft-Vakuum-Wandler wird durch Druckluft angetrieben und erzeugt ein Vakuum bzw. einen Unterdruck für das Vakuumhalteelement. In der Prüfeinheit kann ein Druckluft-Vakuum-Wandler für mehrere Vakuumhalteelemente vorgesehen sein. Bevorzugt ist jeweils ein Druckluft-Vakuum-Wandler für jedes Vakuumhalteelement vorgesehen. Optimalerweise lassen sich diese Druckluft-Vakuum-Wandler in die Beine des Halteelementes, insbesondere die drei Beine eines Dreibeins integrieren. Die Verwendung solcher Druckluft-Vakuum-Wandler hat den Vorteil, dass die mobile Prüfeinheit lediglich mit einer Druckluftquelle zum Erzeugen des Unterdrucks für die Vakuumhalteelemente verbunden werden muss. Solche Druckluftquellen bzw. Kompressoren sind standardmäßig verfügbar. Darüber hinaus steht beispielsweise in Wartungshallen für Flugzeuge oder Werkstätten Druckluft üblicherweise zur Verfügung. So kann über die Druckluft eine unkomplizierte Energieversorgung für die Vakuumhalteelemente geschaffen werden.

Die mobile Prüfeinheit ist darüber hinaus bevorzugt so ausgestaltet, dass sie neben dem Druckluftanschluss nur einen elektrischen Anschluss benötigt, so dass sie unkompliziert an nahezu beliebigen Orten in Betrieb genommen werden kann.

Die Anregungsquelle ist als Halogenlampe ausgebildet. Dabei ist die Anregungsquelle zweckmäßigerweise so ausgestaltet, dass die Anregungsenergie variiert werden kann.

Die mobile Prüfeinheit weist ferner eine Steuereinrichtung zum Steuern der Anregungsquelle und/oder der Infrarotkamera auf. Durch die Steuereinrichtung wird beispielsweise die Leistung der Anregungsquelle, eine Pulsdauer bzw. Pulsweite oder Frequenz der Anregungsquelle variiert. Darüber hinaus kann die Steuereinrichtung auch den gesamten Prüfablauf steuern, nämlich die Anregung sowie die Infrarotkamera, so dass sie nach der Anregung in gewünschten zeitlichen Abständen oder zeitlichen Intervallen Bilder der zu prüfenden Oberfläche aufnimmt. D. h. idealerweise ist die Steuereinrichtung so ausgebildet, dass sie den gesamten Prüfvorgang von der Anregung bis zur Bildaufnahme steuert. Die Steuereinrichtung kann dazu ggf. mit Bedien- oder Anzeigeelementen versehen sein, welche eine Einstellung und/oder Aktivierung des Prüfvorganges direkt an der mobilen Prüfeinheit ermöglicht. Darüber hinaus kann die Steuereinrichtung auch mit Speicherelementen zum Speichern der aufgenommenen Bilder versehen sein. Alternativ oder zusätzlich können jedoch die erfassten Bilddaten über eine geeignete Schnittstelle an eine externe Auswerteeinrichtung übergeben werden. Über eine solche Schnittstelle kann alternativ oder zusätzlich auch eine Einstellung bzw. Aktivierung der Steuereinrichtung zum Auslösen und zur Konfiguration des Prüfungsvorganges mit Hilfe einer externen Bedieneinheit vorgenommen werden.

Um die Anregungsquelle in ihrer Leistung anpassen zu können, weist die mobile Prüfeinheit vorzugsweise einen Leistungssteller, d. h. einen elektronischen Leistungssteller auf, mit dessen Hilfe die Leistung der Anregungsquelle, beispielsweise einer Halogenlampe variiert werden kann.

Die Steuereinrichtung ist bevorzugt so ausgestaltet, dass sie die Anregungsquelle zu einer Transientanregung, d. h. einer einmaligen Rechteck-Anregung, oder zu einer harmonischen Anregung ansteuert. Bei der harmonischen Anregung kann es sich um eine periodische harmonische Anregung mit konstanter Frequenz oder auch eine harmonische Anregung mit wechselnder Frequenz (Chirp) handeln. Wenn die Steuereinrichtung so ausgebildet ist, dass sie die Anregungsquelle zu einer Transient- oder Chirp-Anregung ansteuert, wird darüber hinaus von der Steuereinrichtung die Infrarotkamera so gesteuert, dass entsprechende Bilder der Bauteiloberfläche während des Aufheiz- oder während des Abkühlvorganges aufgenommen werden. Durch die Steuereinrichtung oder aber bevorzugt durch eine zusätzliche Auswerteeinheit erfolgt die Auswertung der Signalantwort, d. h. der auf-genommenen Wärmebilder in der Weise, dass der pixelweise Temperatur-Zeitverlauf ausgewertet wird. Dabei können entweder Approximationsverfahren zur analytischen Beschreibung des Temperatur-Zeitverlaufes verwendet werden oder es kann eine Fourier-Transformation mit vorgegebener Frequenz stattfinden, wobei die Frequenz die auszuwertende Tiefenlage im Bauteil repräsentiert. Für den Fall, dass eine kontinuierliche harmonische Anregung durch die Steuereinrichtung veranlasst wird, wird die Auswerteeinheit die Auswertung bevorzugt in der Weise durchführen, dass ein so genanntes Lock-In-Verfahren zur Auswertung verwendet wird, bei welchem die Auswertung bevorzugt parallel zur Anregung bzw. Bilderfassung abläuft, so dass eine Messung über eine quasi unendlich hohe Anzahl von Anregungsperioden möglich ist. Bei der mobilen Prüfeinheit gemäß der Erfindung ist es jedoch besonders bevorzugt, dass eine einmalige Anregung mit einer anschließenden Aufnahmephase und einer anschließenden Auswertephase durchgeführt wird, um eine besonders schnelle Messung und Auswertung zu erreichen. Dazu sind die Steuereinrichtung und eine möglicherweise vorhandene Auswerteeinrichtung wie vorangehend beschrieben entsprechend ausgestaltet, um eine solche Anregung und Auswertung durchführen zu können.
Weiter bevorzugt weist die mobile Prüfeinheit eine Auswerte- oder Anzeigeeinheit auf. Diese kann, wie vorangehend bereits beschrieben, in die Steuereinrichtung integriert oder direkt mit dieser verbunden sein, so dass die Auswerte- und Anzeigeeinheit einen Teil der mobilen Prüfeinheit bildet. Die Auswerte- oder Anzeigeeinheit kann darüber hinaus zur Ansteuerung der vorangehend beschriebenen Steuereinrichtung dienen, indem beispielsweise der Steuereinrichtung die Art der Anregung durch die Anregungsquelle und die Art der Aufnahmen durch die Infrarotkamera vorgegeben wird. Anstatt die Auswerte- und Anzeigeeinheit in die Steuereinrichtung zu integrieren, wäre es auch möglich, die Steuereinheit bzw. deren Funktionalität ganz oder zumindest teilweise in die Auswerte- oder Anzeigeeinheit zu integrieren.

Gemäß einer bevorzugten Ausführungsform ist die Auswerte- und Anzeigeeinheit von der mobilen Prüfeinheit getrennt ausgebildet und mit der mobilen Prüfeinheit über eine drahtgebundene oder drahtlose Datenverbindung gekoppelt. Sie kann so eine externe Bedieneinheit bilden. Dies hat den Vorteil, dass die Bedienung der Prüfeinheit sowie die Beobachtung der Prüfergebnisse aus einer bequemen, von der Prüfeinheit beabstandeten Position erfolgen kann. Dies ist insbesondere bei der Prüfung großer und komplexer Bauteile von Vorteil, da sich die Bedienperson dann während der Durchführung der Prüfung nicht unmittelbar an der Prüfeinheit befinden muss. Die drahtgebundene Datenverbindung kann beispielsweise über eine übliche Schnittstelle, wie eine serielle Schnittstelle oder eine Netzwerkverbindung erfolgen. Eine drahtlose Verbindung kann ebenfalls über herkömmliche Funkschnittstellen wie beispielsweise Wireless LAN oder Ähnlichem erfolgen.

Die Auswerte- und Anzeigeeinheit kann weiter bevorzugt von einem üblichen Personal Computer mit einer entsprechend angepassten Software in Form einer Steuer- und Auswertesoftware für die mobile Prüfeinheit gebildet werden. Idealerweise handelt es sich dabei um einen tragbaren Personal Computer, wie ein Notebook oder einen Tablett-Computer. Idealerweise findet ein Computer mit Touchscreen Verwendung, so dass sich die mobile Prüfeinheit über die Auswerte-und Anzeigeeinheit sehr einfach bedienen lässt. Die Auswerte- und Anzeigeeinheit weist dabei bevorzugt ein Display auf, auf welchem die von der Infrarotkamera aufgenommenen Bilder in geeigneter Qualität und Auflösung dargestellt werden können, so dass an der Auswerte-und Anzeigeeinheit eine Beurteilung der Prüfergebnisse möglich ist. Die Auswerte- und Anzeigeeinheit kann mit automatischen Prüfalgorithmen zur Bildauswertung und Fehlererkennung versehen sein. Darüber hinaus weist die Anzeige- und Auswerteeinheit bevorzugt einen Speicher auf, in welchem die aufgenommenen Bilddaten gespeichert werden können. Ferner kann die Auswerte- und Anzeigeeinheit mit weiteren Schnittstellen zur Datenkommunikation, beispielsweise zur Einbindung in ein Netzwerk versehen sein, welche es ermöglichen, Prüf- oder Messergebnisse an andere Systeme oder Computer weiter zu senden oder auf externen Speichermedien abzulegen.

Besonders bevorzugt ist die Auswerte- und Anzeigeeinheit derart ausgebildet, dass sie eine überlagerte Bilddarstellung verschiedener Bilder ermöglicht. Insbesondere ist die Auswerte- und Anzeigeeinheit derart ausgebildet, dass sie eine überlagerte Darstellung eines von der Infrarotkamera aufgenommen und gespeicherten Fehlerbildes mit einem Live-Sichtbild oder Live-Infrarotbild ermöglicht. Zur Erzeugung des Live-Bildes kann in der mobilen Prüfeinheit eine zusätzliche Kamera angeordnet sein, welche ein normales Sichtbild aufnimmt. Alternativ kann auch die Infrarotkamera so ausgebildet sein, dass sie ein geeignetes Live-Bild erzeugt. Die Überlagerung des erfassten Fehlerbildes mit dem Live-Sichtbild oder Live-Infrarotbild ermöglicht es, leicht erfasste Fehler an dem zu prüfenden Bauteil zu lokalisieren.

Gemäß einer weiteren bevorzugten Ausführungsform kann die mobile Prüfeinheit einen Bildprojektor aufweisen, welcher derart angeordnet ist, dass er ein Bild auf die zu prüfende Fläche projiziert. Beispielsweise kann so mittels des Bildprojektors eine Begrenzung der von der Infrarotkamera erfassten und von der Anregungsquelle bestrahlten Fläche auf die zu prüfende Fläche projiziert werden, so dass die mobile Prüfeinheit so ausgerichtet werden kann, dass der gewünschte zu prüfende Bereich eines Bauteils auch tatsächlich von der Infrarotkamera und der Anregungsquelle erfasst wird. Besonders bevorzugt wirkt der Bildprojektor mit einer Auswerteeinrichtung, beispielsweise der vorangehend beschriebenen Auswerte- und Anzeigeeinheit und/oder der beschriebenen Steuereinrichtung derart zusammen, dass der Bild-projektor ein zuvor von der Infrarotkamera aufgenommenes und in der Auswerteeinrichtung gespeichertes Fehlerbild auf die zu prüfende Fläche projiziert. Dadurch ist eine besonders einfache Lokalisierung im Fehlerbild erkennbarerer Fehler an dem zu prüfenden Bauteil möglich, da der Fehler durch den Bildprojektor, beispielsweise einen Mikrobeamer genau an derjenigen Stelle auf der Bauteiloberfläche dargestellt wird, unter der sich im Inneren des Bauteils der Fehler befindet. So kann das Bauteil dann beispielsweise sehr einfach an dieser Stelle für eine nachfolgende Reparatur z. B. mit Farbe markiert werden.

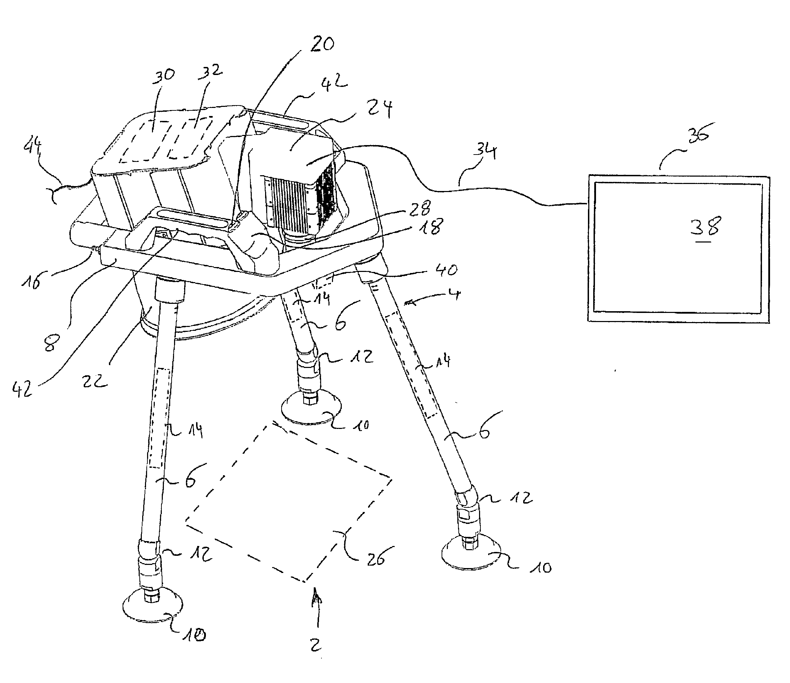

Nachfolgend wird die Erfindung beispielhaft anhand der beigefügten Figur beschrieben, welche schematisch eine erfindungsgemäße thermographische Materialprüfvorrichtung zeigt.

Die in der Figur gezeigte erfindungsgemäße thermographische Materialprüfvorrichtung ist als eine mobile Prüfeinheit 2 ausgestaltet, welche es ermöglicht, auch an einem großen komplexen zu prüfenden Gegenstand an einer gewünschten zu prüfenden Stelle angebracht zu werden. Die mobile Prüfeinheit 2 weist eine Haltevorrichtung 4 auf, welche als Dreibein ausgebildet ist. Die drei Beine 6 erstrecken sich ausgehend von einem Träger bzw. Tragrahmen 8. An den freien Enden der Beine 6, welche von dem Tragrahmen 8 beabstandet sind, ist an jedem der Beine 6 jeweils ein Saugnapf bzw. ein Vakuumhalteelement 10 angebracht. Die Vakuumhalteelemente 10 sind an den Beinen 6 so angeordnet, dass ihre Anlageflächen, d. h. die dem Tragrahmen 8 abgewandten Flächen in einer Ebene gelegen sind, so dass alle drei Vakuumhalteelemente 10 flächig an einer zu prüfenden Oberfläche zur Anlage kommen können. Um auch die Anlage der Anlageflächen der Vakuumhalteelemente 10 an gekrümmten bzw. nicht planen Oberflächen zu ermöglichen, sind die Vakuumhalteelemente 10 mit den Beinen 6 jeweils über Gelenke 12 verbunden, welche eine Ausrichtung der der Vakuumhalteelemente 10 in ihrer Winkellage relativ zu den Beinen 6 ermöglichen. Zur Aktivierung, d. h. zum Fixieren bzw. Lösen der Vakuumhalteelemente 10 sind in den Beinen 6 Druckluft-Vakuum-Wandler 14 angeordnet. Die Druckluft-Vakuum-Wandler 14 erzeugen jeweils das zum Aktivieren bzw. Befestigen des zugehörigen Vakuumhalteelementes 10 erforderliche Vakuum über eine Druckluftzufuhr. Dazu ist an dem Tragrahmen 8 ein Druckluftanschluss 16 angeordnet, welcher mit den Druckluft-Vakuum-Wandlern über eine Ventilanordnung 18 verbunden ist. Die Ventilanordnung 18 enthält manuell zu betätigende Ventile, durch deren Betätigung die Druckluft-Vakuum-Wandler 14 mit Druckluft beaufschlagt werden können, um ein gewünschtes Vakuum zu erzeugen. Zum Lösen ermöglicht es die Ventilanordnung 18 durch Öffnen eines entsprechenden Ventils die Druckluft-Vakuum-Wandler 14 wieder zu entlüften, d. h. den vorhandenen Druck abzubauen und so den Unterdruck an den Vakuumhalteelementen 10 aufzuheben. Die Ventilanordnung 18 weist dazu zwei Drucktasten 20 auf, über welche das Aktivieren und Lösen der Vakuumhalteelemente 10 durch Druckbeaufschlagung der Druckluft-Vakuum-Wandler 14 in der beschriebenen Weise erfolgt.

Die Beine 6 mit den Vakuumhalteelementen 10 sind so angeordnet, dass zwischen den Vakuumhalteelementen 10 eine freie Fläche verbleibt, in welcher die zu prüfende bzw. zu untersuchende Fläche liegt.

An dem Tragrahmen 8 ist eine Anregungsquelle 22 in Form einer Halogenlampe befestigt. An der Anregungsquelle 22 ist eine Infrarotkamera 24 befestigt. Die Anregungsquelle 22 und die Infrarotkamera 24 sind relativ zueinander in einem festen definierten Winkel ausgerichtet. Dieser Winkel ist so gewählt, dass die Anregungsquelle 22 den zu untersuchenden Bereich bzw. die zu prüfende Fläche 26 zwischen den Vakuumhalteelementen 10 bestrahlt. Die Infrarotkamera 24 ist mit ihrem Objektiv 28 so ausgerichtet, dass sie ebenfalls die zu prüfende Fläche 26 betrachtet.

In das Gehäuse der Anregungsquelle 22 sind ein Leistungssteller 30 sowie eine Steuereinrichtung 32 in Form einer Steuerelektronik integriert, welche die Anregungsquelle 22 und die Infrarotkamera 24 zur Durchführung des Prüfvorganges steuert. Über den Leistungssteller 30 kann die Anregungsquelle 22 in ihrer Leistung variiert werden. Dazu kann der Leistungssteller 30 von der Steuereinrichtung 32 angesteuert werden. Die Steuereinrichtung 32 steuert das Ein- und Ausschalten und die Leistungsabgabe der Anregungsquelle 22 und die Bildaufnahme durch die Infrarotkamera 24 zu gewünschten Zeitpunkten.

Zur Bedienung und Auswertung ist die Steuereinrichtung 32 über eine Datenleitung 34 mit einer Auswerte- und Anzeigeeinheit 36 verbunden. Die Auswerte- und Anzeigeeinheit 36 wird von einem Standard-Computer, wie einem Personal Computer hier in Form eines Tablett-Computers gebildet, auf welchem eine entsprechende Steuerungs- bzw. Auswertesoftware installiert ist. Auf dem Bildschirm 38 der Auswerte- und Anzeigeeinheit werden einzustellende Parameter angezeigt und ausgewählt und es wird das von der Infrarotkamera 24 aufgenommene Fehlerbild zur Anzeige gebracht, wobei gewünschte Fehlerbilder ausgewählt und angezeigt werden können. Auch der Prüfvorgang kann über die Auswerte- und Anzeigeeinheit 36 gestartet werden, um die Steuereinrichtung 32 dann zur Aktivierung der Anregungsquelle 22 und der Infrarotkamera 24 zu veranlassen. Alternativ oder zusätzlich könnten auch an der mobilen Prüfeinheit 2 Bedienungselemente zum Starten eines Prüfvorganges angeordnet sein.

Anstelle der Verbindung über eine Datenleitung 34 könnte die Auswerte- und Anzeigeeinheit 36 auch über eine drahtlose Datenverbindung, beispielsweise Wireless LAN verbunden sein.

Gemäß einer optionalen Ausgestaltung kann in der mobilen Prüfeinheit 2, d. h. beispielsweise an dem Tragrahmen 8 ein Projektor 40 in Form eines Mikrobeamers angeordnet sein, welcher ein Bild auf die zu prüfende Fläche 26 projiziert. Über die Datenleitung 34 können in der Auswerte- und Anzeigeeinheit 36 gespeicherte Bilddaten an den Projektor 40 gesandt werden, so dass dieser ein zuvor aufgenommenes und im Speicher der Auswerte- und Anzeigeeinheit 36 gespeichertes Fehlerbild auf die zu prüfende Fläche 26 projizieren kann. So kann das aufgenommene Fehlerbild auf die Fläche 26 projiziert werden, auf welcher das Bild aufgenommen wurde. So können Fehler direkt lokalisiert und am geprüften Bauteil leicht gekennzeichnet werden, um dann ggf. eine Reparatur oder Ausbesserung vornehmen zu können.

Auch die Auswerte- und Anzeigeeinheit 36 kann so ausgestaltet sein, dass eine Überlagerung mehrerer Bilder auf dem Bildschirm 38 möglich ist. So kann beispielsweise ein aufgenommenes und gespeichertes Fehlerbild einem Live-Bild der Infrarotkamera 24 oder einer zusätzlichen Kamera in der mobilen Prüfeinheit 2 überlagert werden, so dass in dem Überlagerungsbild erkannt werden kann, wo in dem geprüften Bereich mögliche Fehler gelegen sind.

Insgesamt ist die mobile Prüfeinheit 2 so ausgebildet, dass sie leicht getragen und von einer Bedienperson gehandhabt werden kann. Dazu sind an dem Tragrahmen 8 Handgriffe 42 angeordnet, mittels welchen die gesamte mobile Prüfeinheit 2 ergriffen und gehandhabt werden kann. Die mobile Prüfeinheit kann so von Hand mit den Vakuumhalteelementen 10 an eine zu prüfende Bauteiloberfläche angesetzt und positioniert werden. Dann werden die Vakuumhalteelemente 10 über die Ventilanordnung 18 aktiviert und so die gesamte mobile Prüfeinheit 2 an dem zu prüfenden Bauteil fixiert. Die Drucktasten 20 der Ventilanordnung 18 sind an einem der Handgriffe 42 so angeordnet, dass sie leicht bedient werden können, wenn der Handgriff 42 ergriffen ist. Neben der in diesem Ausführungsbeispiel von der mobilen Prüfeinheit 2 getrennten Auswerte- und Anzeigeeinheit 36 sind zum Betrieb der so ausgestalteten Materialprüfvorrichtung keine weiteren Anlagen oder Elemente erforderlich. Die Auswerte- und Anzeigeeinheit 36 könnte ebenfalls in die mobile Prüfeinheit 2 integriert werden oder beispielsweise lösbar an dem Tragrahmen 8 befestigt werden, so dass sie wahlweise an der mobilen Prüfeinheit 2 angebracht oder separat gehalten werden kann. Zur Energieversorgung dient lediglich der Druckluftanschluss 16 und eine Netzanschlussleitung 44. So wird eine sehr einfache Inbetriebnahme an nahezu jedem beliebigen Ort gewährleistet, an welchem Elektrizität und Druckluft zur Verfügung steht. Die Druckluft könnte ggf. über einen externen mobilen Kompressor bereitgestellt werden.

### Bezugszeichenliste

- 2: - mobile Prüfeinheit
- 4: - Haltevorrichtung
- 6: - Beine
- 8: - Tragrahmen
- 10: - Vakuumhalteelemente
- 12: - Gelenke
- 14: - Druckluft-Vakuum-Wandler
- 16: - Druckluft-Anschluss
- 18: - Ventilanordnung
- 20: - Drucktaste
- 22: - Anregungsquelle
- 24: - Infrarotkamera
- 26: - zu prüfende Fläche
- 28: - Objektiv
- 30: - Leistungssteller
- 32: - Steuereinrichtung
- 34: - Daten
- 36: - Auswerte- und Anzeigeeinheit
- 38: - Bildschirm
- 40: - Projektor
- 42: - Handgriffe
- 44: - Netzanschlussleitung

## Patentansprüche

1. Thermographische Materialprüfvorrichtung mit einer Anregungsquelle in Form einer Halogenlampe und einer Infrarotkamera, wobei die Anregungsquelle (22) und die Infrarotkamera (24) in eine mobile Prüfeinheit (2) integriert sind, welche eine Haltevorrichtung (4) aufweist, die zum Befestigen der mobilen Prüfeinheit (2) an einem zu prüfenden Bauteil ausgestaltet ist, wobei die mobile Prüfeinheit (2) eine Steuereinrichtung (32) zum Steuern der Anregungsquelle (22) und/oder der Infrarotkamera (24) aufweist und die Haltevorrichtung (4) zumindest ein Vakuumhalteelement (10) aufweist und in die mobile Prüfeinheit (2) ein Schaltelement (18) zum Aktivieren und Lösen des Vakuumhalteelementes (10) integriert ist, **dadurch gekennzeichnet, dass** Drucktasten (20) des Schaltelements (18) in einem der Handgriffe (42) angeordnet sind, die zur Handhabung der gesamten mobilen Prüfeinheit (2) dienen.

2. Thermographische Materialprüfvorrichtung nach Anspruch 1, **dadurch gekennzeichnet, dass** die Haltevorrichtung (4) als Dreibein ausgebildet ist.

3. Thermographische Materialprüfvorrichtung nach einem der vorhergehenden Ansprüche, **dadurch gekennzeichnet, dass** die Beine (6) des Dreibeins an ihren freien Enden jeweils ein Vakuumhalteelement (10) tragen.

4. Thermographische Materialprüfvorrichtung nach einem der vorangehenden Ansprüche, **dadurch gekennzeichnet, dass** das Vakuum-haltelement (10) einen in die mobile Prüfeinheit (2) integrierten Druckluft-Vakuum-Wandler (14) aufweist.

5. Thermographische Materialprüfvorrichtung nach einem der vorangehenden Ansprüche, **dadurch gekennzeichnet, dass** die mobile Prüfeinheit (2) einen Leistungssteller (30) für die Anregungsquelle (22) aufweist.

6. Thermographische Materialprüfvorrichtung nach einem der vorangehenden Ansprüche, **dadurch gekennzeichnet, dass** die Steuereinrichtung (32) derart ausgestaltet ist, dass sie die Anregungsquelle (22) zu einer Transient-anregung oder einer harmonischen Anregung ansteuert.

7. Thermographische Materialprüfvorrichtung nach einem der vorangehenden Ansprüche, **gekennzeichnet durch** eine Aus-werteund Anzeigeeinheit (36), bei welcher es sich vorzugsweise um einen tragbaren Personal-Computer handelt.

8. Thermographische Materialprüfvorrichtung nach Anspruch 6, **dadurch gekennzeichnet, dass** die Auswerte- und Anzeigeeinheit (36) von der mobilen Prüfeinheit (2) getrennt ausgebildet und mit der mobilen Prüfeinheit (2) über eine drahtgebundene oder drahtlose Datenverbindung (34) gekoppelt ist.

9. Thermographische Materialprüfvorrichtung nach einem der Ansprüche 10 bis 12, **dadurch gekennzeichnet, dass** die Auswerteund Anzeigeeinheit (36) derart ausgebildet ist, dass sie eine überlagerte Darstellung eines von der Infrarotkamera aufgenommenen und gespeicherten Fehlerbildes mit einem Live-Sichtbild oder Live-Infrarotbild ermöglicht.

10. Thermographische Materialprüfvorrichtung nach einem der vorangehenden Ansprüche, **dadurch gekennzeichnet, dass** die mobile Prüfeinheit (2) einen Bildprojektor (40) aufweist, welcher derart angeordnet ist, dass er ein Bild auf eine zu prüfende Fläche (26) projiziert.

11. Thermographische Materialprüfvorrichtung nach Anspruch 10, **dadurch gekennzeichnet, dass** der Bildprojektor (40) mit einer Auswerteeinrichtung (36) derart zusammenwirkt, dass der Bildprojektor (40) ein zuvor von der Infrarotkamera (24) aufgenommenes und in der Auswerteeinrichtung (36) gespeichertes Fehlerbild auf die zu prüfende Fläche (26) projiziert.

## Claims

1. A thermographic material testing device with an excitation source in the form of a halogen lamp and an infrared camera, wherein the excitation source (22) and the infrared camera (24) are integrated into a mobile testing unit (2) which comprises a holding device (4) which is designed for fastening the mobile testing unit (2) on a component to be tested, wherein the mobile testing unit (2) comprises a control device (32) for controlling the excitation source (22) and/or the infrared camera (24), and the holding device (4) comprises at least one vacuum holding element (10), and a switch element (18) for activating and releasing the vacuum holding element (10) is integrated into the mobile testing unit (2), **characterised in that** push buttons (20) of the switch element (18) are arranged in one of the handgrips (42) which serve for the handling of the complete mobile testing unit (2).

2. A thermographic material testing device according to claim 1, **characterised in that** the holding device (4) is designed as a tripod.

3. A thermographic material testing device according to one of the preceding claims, **characterised in that** the legs (6) of the tripod at their free ends each comprise a vacuum holding element (10).

4. A thermographic material testing device according to one of the preceding claims, **characterised in that** the vacuum holding element (10) comprises a pressurised air - vacuum transducer (14) integrated into the mobile testing unit (2)

5. A thermographic material testing device according to one of the preceding claims, **characterised in that** the mobile testing unit (2) comprises a power controller (30) for the excitation source (22).

6. A thermographic material testing device according to one of the preceding claims, **characterised in that** the control device (32) is designed in a manner such that it activates the excitation source (22) into a transient excitation or a harmonic excitation.

7. A thermographic material testing device according to one of the preceding claims, **characterised by** an evaluation and display unit (36), with which it is preferably the case of a portable personal computer.

8. A thermographic material testing device according to claim 6, **characterised in that** the evaluation and display unit (36) is designed in a manner separate from the mobile testing unit (2) and is coupled to the mobile testing unit (2) via a wired or wireless data connection (34).

9. A thermographic material testing device according to one of claims 10 to 12, **characterised in that** the evaluation and display unit (36) is designed in a manner such that it permits a superimposed representation of an error image which is recorded and stored by the infrared camera, with a live view image or live infra-red image.

10. A thermographic material testing device according to one of the preceding claims, **characterised in that** the mobile testing unit (2) comprises an image projector (40) which is arranged in a manner such that it projects an image onto a surface (26) to be tested.

11. A thermographic material testing device according to claim 10, **characterised in that** the image projector (40) cooperates with an evaluation device (36) in a manner such that the image projector (40) projects an error image which is previously recorded by the infrared camera (24) and stored in the evaluation device (36), onto the surface (26) to be tested.

## Revendications

1. Dispositif de contrôle thermographique de matériaux, comportant une source d'excitation sous forme d'une lampe à halogène et une caméra infrarouge, la source d'excitation (22) et la caméra infrarouge (24) étant intégrées dans une unité de contrôle mobile (2), qui comprend un dispositif de fixation (4), lequel est configuré pour assurer la fixation de l'unité de contrôle mobile (2) à une pièce à contrôler, l'unité de contrôle mobile (2) comportant un dispositif de commande (32) destiné à commander la source d'excitation (22) et/ou la caméra infrarouge (24), et le dispositif de fixation (4) comprenant au moins un élément de fixation de type ventouse (10), et un élément de commutation (18), destiné à activer et détacher l'élément de fixation de type ventouse (10), étant intégré dans l'unité de contrôle mobile (2), **caractérisé en ce que** des boutonspoussoirs (20) de l'élément de commutation (18) sont disposés dans l'une des poignées (42), qui servent à la manipulation de l'unité de contrôle mobile (2) dans son ensemble.

2. Dispositif de contrôle thermographique de matériaux selon la revendication 1, **caractérisé en ce que** le dispositif de fixation (4) est configuré comme un trépied.

3. Dispositif de contrôle thermographique de matériaux selon l'une des revendications précédentes, **caractérisé en ce que** les jambes (6) du trépied portent chacune, en leur extrémité libre, un élément de fixation de type ventouse (10).

4. Dispositif de contrôle thermographique de matériaux selon l'une des revendications précédentes, **caractérisé en ce que** l'élément de fixation de type ventouse (10) comprend un convertisseur air comprimé-vide (14) intégré dans l'unité de contrôle mobile (2).

5. Dispositif de contrôle thermographique de matériaux selon l'une des revendications précédentes, **caractérisé en ce que** l'unité de contrôle mobile (2) comprend un actionneur de puissance (30) pour la source d'excitation (22).

6. Dispositif de contrôle thermographique de matériaux selon l'une des revendications précédentes, **caractérisé en ce que** le dispositif de commande (32) est configuré de façon à commander la source d'excitation (22) afin que cette dernière assure une excitation transitoire ou harmonique.

7. Dispositif de contrôle thermographique de matériaux selon l'une des revendications précédentes, **caractérisé par** une unité d'évaluation et d'affichage (36), qui, de préférence, est un ordinateur personnel portable.

8. Dispositif de contrôle thermographique de matériaux selon la revendication 6, **caractérisé en ce que** l'unité d'évaluation et d'affichage (36) est configurée séparément de l'unité de contrôle mobile (2), et est couplée à l'unité de contrôle mobile (2) par l'intermédiaire d'une liaison de données (34) de type filaire ou non filaire.

9. Dispositif de contrôle thermographique de matériaux selon l'une des revendications 10 à 12, **caractérisé en ce que** l'unité d'évaluation et d'affichage (36) est configurée de façon à permettre une représentation superposée d'une image des défauts, prise par la caméra infrarouge et mémorisée, et d'une image directe dans le visible ou une image directe dans l'infrarouge.

10. Dispositif de contrôle thermographique de matériaux selon l'une des revendications précédentes, **caractérisé en ce que** l'unité de contrôle mobile (2) comprend un projecteur d'images (40), qui est disposé de façon à projeter une image sur une surface (26) à contrôler.

11. Dispositif de contrôle thermographique de matériaux selon la revendication 10, **caractérisé en ce que** le projecteur d'images (40) coopère avec un dispositif d'évaluation (36) de telle sorte que le projecteur d'images (40) projette sur la surface (26) à contrôler une image des défauts préalablement prise par la caméra infrarouge (24) et mémorisée dans le dispositif d'évaluation (36).
